# EUROPEAN PATENT SPECIFICATION

(11) **EP 1 411 566 B1**
(45) Date of publication and mention of the grant of the patent: **07.12.2005**
(21) Application number: 03013031.4
(22) Date of filing: 10.06.2003
(51) Int. Cl.: H01M 2/24, H01M 2/08, H01M 2/06

(54) **Sealing ring to be applied to connection holes of the cells of an accumulator**
Dichtungsring zum Anbringen an den Verbindungslöchern von Zellen eines Akkumulators
Joint de scellement à appliquer aux trous de connexion de cellules d'un accumulateur

(30) Priority: 11.06.2002 IT VI20020018
(43) Date of publication of application: 21.04.2004
(73) Proprietor: Stocchiero, Franco, 36050 Montorso Vicentino (IT)
(72) Inventor: Stocchiero, Franco, 36050 Montorso Vicentino (IT)
(74) Representative: Terreran, Gabrio

(56) References cited:
- EP-A- 0 244 683
- DE-A- 19 935 484
- FR-A- 2 032 096
- GB-A- 1 114 332
- GB-A- 1 476 308
- US-A- 4 508 797

## Description

The finding concerns a sealing ring to be applied to connection holes of the cells of an accumulator.

As it is known, electrical accumulators substantially consist of a container made from polypropylene equipped on the inside with a plurality of divider walls. The walls define cells inside which the elements of the accumulator and the electrolyte are arranged.

The elements consist of a plurality of plates arranged interfacing each other and electrically and mechanically connected through connection rods made from lead, known as straps.

The rods of the adjacent elements with opposite polarity are connected together through openings consisting of connection through holes with a frusto-conical cross-section made on the divider walls.

The electromechanical connection is obtained by welding making an electrical current of an intensity such as the make the parts in contact melt pass through the rods.

To avoid the electrolyte flowing from one cell to the other and to avoid the divider wall being damaged during welding, an insert is used, known as a sealing ring.

The sealing ring comprises a circular plate equipped with a through hole axially to which is arranged a cylindrical sheath with a diameter equal to the connection hole and a length equal to or less than the thickness of the divider wall.

The ring is coupled in the connection hole and is generally made from polycarbonate, which as known has a higher melting point than that of polypropylene.

The sheath being placed between the divider wall and the connection rods prevents the wall itself from melting during welding.

The circular plate which is placed in contact with the divider wall carries out the function of a gasket and ensures the airtight seal of each cell. A sealing ring of the kind disclosed above is known from document FR 2 032 096; in particular, the sealing ring known from this document comprises a sheath made of caoutchouc and comprising two shoulders so as to recover both sides of the hole.

A first drawback of the described sealing ring consists in the fact that the coupling with the connection hole is not stable and is not very reliable.

This is substantially due to the fact that both the sealing ring and the connection hole are obtained by moulding or punching and therefore have dimensional tolerances that cannot guarantee an ideal coupling.

Another drawback linked to the previous one consists in the fact that the sealing ring must be inserted manually and contextually to the arranged of the elements. This is to avoid the ring accidentally detaching from the wall.

A further drawback consists in the fact that the contact region between the cylindrical sheath and the surfaces of the connection hole is limited to an annular region near to the plate.

This is substantially due to the fact that, as stated previously, the sheath has a circular cross-section whereas the connection hole has a frusto-conical cross-section.

Another drawback linked to the previous one consists in the fact that the limited contact surface between sheath and the surfaces of the connection hole does not allow an ideal dissipation of the heat which develops during the welding of the rods. Moreover, the heat concentrating in the annular contact region can compromise the airtight seal of the cell.

The purpose of the present finding is to overcome said drawbacks.

In particular, a first purpose of the finding is to realise a sealing ring which stably coupled with the connection hole.

A further purpose is to realise a ring which can be inserted in the corresponding connection hole even automatically and at a different time to the insertion of the elements of the accumulator.

Another purpose is to realise a sealing ring which allows a better dissipation of the heat which develops during the welding of the rods.

A further purpose is to realise a ring which is cost-effective and which can be realised by moulding.

The last but not least purpose is to realise a protective ring which does not require specific tools for insertion in the corresponding connection hole.

Said purposes are accomplished by a protective ring to be applied to frustoconical connection holes of the divider walls of an accumulator, in accordance with the main claim.

Advantageously, the reliability of the coupling does not depend upon the dimensional tolerances of the hole and of the cylindrical sheath but upon the geometric shape of the sheath itself.

Again advantageously, the reliability accomplished ensures that the ring, once inserted, does not accidentally detach from the wall, for example during the transportation of the container.

This allows such an assembly step to be moved to any point in the production chain of the accumulator.

Said purposes and advantages shall be made clearer during the description of a preferred embodiment given for indicating and not limiting purposes with reference to the attached tables of drawings, where:
- figure 1 represents a top view of a section of an accumulator equipped with the protective ring object of the finding;
- figure 2 represents a section view of the protective ring object of the finding inserted in a connection hole;
- figure 3 represents another section view of the ring of figure 2 before insertion in a corresponding connection hole;
- figure 4 represents a section view of a variant embodiment of the ring of figure 2 before insertion in a corresponding connection hole;
- figure 5 represents a section view of the ring of figure 4 inserted in a corresponding connection hole.
- figure 6 represents a section view of another variant embodiment of the ring of figure 2 before insertion in a corresponding connection hole;
- figure 7 represents a section view of the ring of figure 6 inserted in a corresponding connection hole.

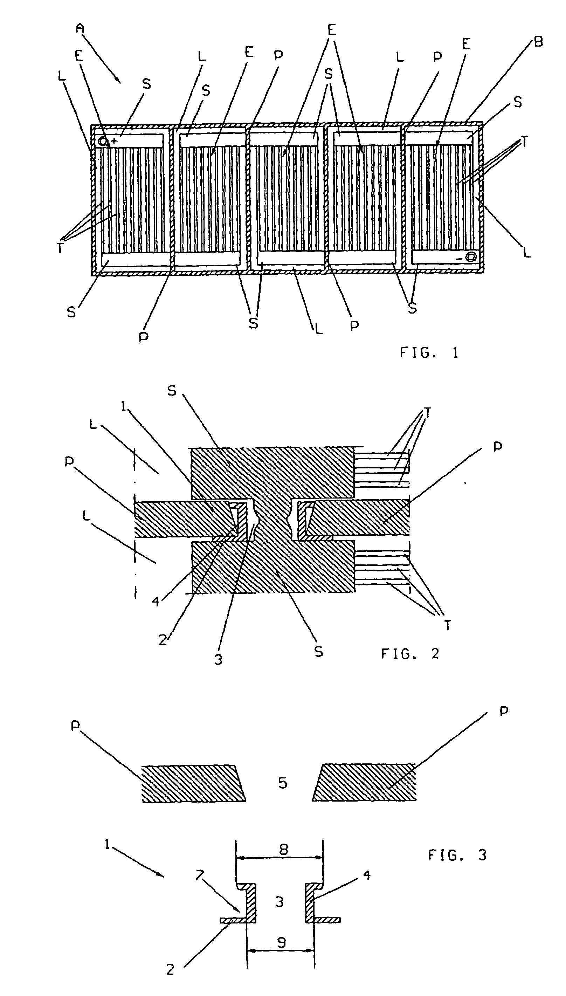

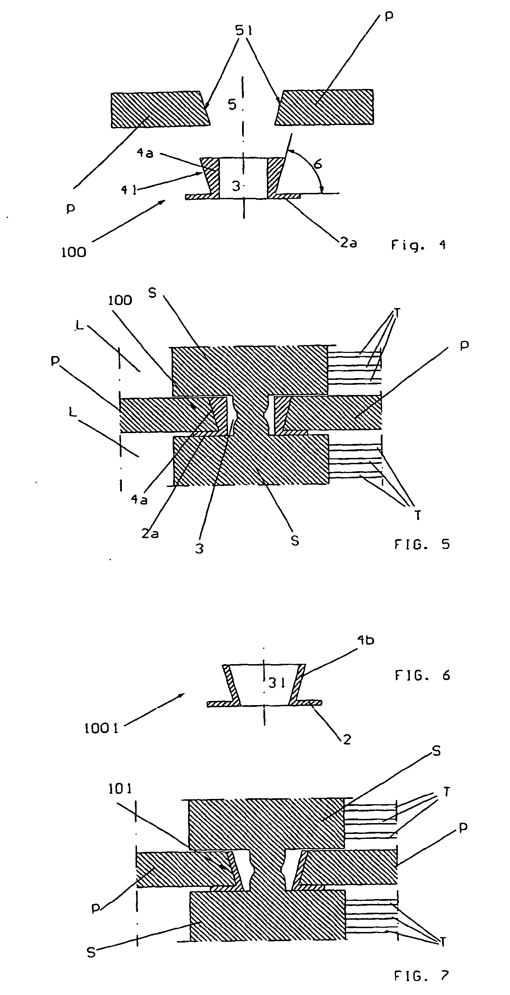

The protective ring to be applied to frusto-conical connection holes 5 of the cells L of an accumulator A of the type represented in figure 1, object of the present finding, is represented in detail in figure 2, 3 and 4 where it is wholly indicated with reference numeral 1.

The accumulator A substantially consists of a container B made from polypropylene equipped on the inside with a plurality of vertical divider walls P which define the cells L inside which the elements of the accumulator and the electrolyte are arranged.

The elements E, as stated previously, consist of a plurality of plates T arranged interfaced with each other electrically and mechanically connected through connection rods S made from lead.

As far as the sealing ring 1 is concerned, it comprises a plate 2 equipped with a through hole 3 axially to which is arranged the base 7 of a sheath 4, shown in detail in figure 2 and 3, suitable for coupling with the connection hole 5 made on the divider wall P.

The finding foresees that the sheath 4 has a portion of its cross-section with a diameter 8 greater than the diameter 9 of the base 7 of the sheath 4 itself.

This realises an undercut which prevents the accidental decoupling of the protective ring 1 from the hole 5.

It should be observed that the connection hole 5 is realised by punching and therefore has a substantially frusto-conical cross-section.

The through hole 3 of the sheath 4 which allows the passage of the rods S has a circular cross-section and a length equal to or less than the thickness of the divider wall P.

As far as the plate 2 is concerned, it is circular shaped although in different embodiments it can be of different geometric shapes.

A variant embodiment wholly indicated with reference numeral 100 in figure 4 and 5 differs from the previous embodiment in that the sheath 4a has a substantially frusto-conical outer longitudinal cross-section.

In particular, the taper of the frusto-conical portion diverges moving away from said plate 2a.

The angle defined by the intersection of the outer surface 41 of the sheath 4 with the plate 2, indicated with 6 in figure 3, is less than 90 degrees.

More generally, such an angle 6 is preferably equal to the inclination of the walls of the connection hole 5.

It should also be observed that the outer profile of the sheath 4 is substantially matching the profile of the hole 5.

Another embodiment which is not represented differs from the previous one in that a portion of the profile of the outer surface 41 of the sheath 4 is frusto-conical.

Another variant embodiment wholly indicated with reference numeral 101 in figure 6 differs in that the sheath 4b has the through hole 31 with a frusto-conical cross-section.

The insertion of the protective ring 1 in the hole 5 foresees that the operator or a manipulator arranges the ring itself at the hole and then forces it against the wall.

The flexibility of the ring 1 and in particular of the sheath 4 allows the latter to deform until it snaps into the hole 5.

The flexibility of the sheath 4 substantially depends upon both the small size of the sheath and the intrinsic characteristics of the material used to realise it which, as stated previously, is polycarbonate or alternative materials.

The reliability of the coupling is ensured in this case by the interference of the protrusion of the sheath 4 with the walls of the hole 5.

This allows a coupling which is secure to be obtained and such as to allow the transportation and movement of the container B without the risk of the ring 1 detaching from the wall P.

The assembly of the elements and of the accumulator can thus be carried out even at different times and places, following the known procedures already described.

It is important to observe how the proposed solution allows rings 1, 100, 101 to be realised the dimensional characteristics of which are no longer critical for a reliable connection to the wall.

It should also be observed that the proposed ring, especially in the embodiments indicated with 100 and 101, allows a better dissipation of the heat which develops in the welding step of the rods S.

This is due to the fact the whole outer surface of the sheath 4a and 4b is in contact with the walls 51 of the connection hole 5.

Although the finding has been described referring to the attached tables of drawings, it can undergo modifications in the embodiment step, all covered by the same inventive concept expressed by the claims shown hereafter and therefore protected by the present patent.

## Claims

1. Sealing ring (1, 100, 101) to be applied to frusto-conical connection holes (5) of the divider walls (P) of an accumulator (A), said ring comprising a plate (2, 2a) equipped with a through hole (3, 31) axially to which is arranged the base (7) of a sheath (4, 4a, 4b) suitable for coupling in said connection hole (5) **characterized in that** the outer surface (41) of said sheath (4a, 4b) is substantially frusto-conical so as to substantially match the profile of the hole (5).

2. Ring (100, 101) according to claim 1 **characterized in that** the taper of said frusto-conical sheath diverges moving away from said plate (2, 2a).

3. Ring (100, 101) according to any one of the previous claims **characterized in that** the inner surface of said sheath (4b) is frusto-conical.

4. Ring (100, 101) according to any one of the previous claims **characterized in that** said plate (2, 2a) is substantially circular.

5. Ring (1, 100, 101) according to any one of the previous claims **characterized in that** said sheath (4, 4a, 4b) has a length equal to the thickness of the divider wall (P) of said accumulator (A).

6. Ring (1, 100, 101) according to any one of claims 1 to 4 **characterized in that** said sheath (4, 4a, 4b) has a length less than the thickness of the divider walls (P) of said accumulator (A).

## Patentansprüche

1. Dichtungsring (1, 100, 101) für die Anwendung an kegelstumpfförmigen Verbindungslöchern (5) der Trennwände (P) eines Akkumulators (A), wobei dieser Ring eine Platte (2, 2a) umfasst, die mit einer durchgehenden Bohrung (3, 31) versehen ist, zu welcher die Basis (7) einer in das Verbindungsloch (5) einzukuppelnden Hülse (4, 4a, 4b) axial angeordnet ist, **dadurch gekennzeichnet, dass** die Außenfläche (41) der Hülse (4a, 4b) im Wesentlichen kegelstumpfförmig ist und damit im Wesentlichen dem Profil des Lochs (5) entspricht.

2. Ring (100, 101) gemäß Patentanspruch 1, **dadurch gekennzeichnet, dass** die Kegelsteigung der kegelstumpfförmigen Hülse von der Platte (2, 2a) fort divergiert.

3. Ring (100, 101) gemäß eines jeglichen der vorstehenden Patentansprüche, **dadurch gekennzeichnet, dass** die Innenfläche der Hülse (4b) kegelstumpfförmig ist.

4. Ring (100, 101) gemäß eines jeglichen der vorstehenden Patentansprüche, **dadurch gekennzeichnet, dass** die Platte (2, 2a) im Wesentlichen kreisförmig ist.

5. Ring (1, 100, 101) gemäß eines jeglichen der vorstehenden Patentansprüche, **dadurch gekennzeichnet, dass** die Länge der Hülse (4, 4a, 4b) der Dicke der Trennwand (P) des Akkumulators (A) entspricht.

6. Ring (1, 100, 101) gemäß eines jeglichen der Patentansprüche von 1 bis 4, **dadurch gekennzeichnet, dass** die Länge der Hülse (4, 4a, 4b) kleiner ist als die Dicke der Trennwand (P) des Akkumulators (A).

## Revendications

1. Bague d'étanchéité (1, 100, 101) à appliquer sur des trous de connexion en tronc de cône (5) des parois de séparation (P) d'un accumulateur (A), ladite bague comprenant une plaque (2, 2a) munie d'un trou passant (3, 31) sur laquelle est positionnée d'une manière axiale la base (7) d'une gaine (4, 4a, 4b) indiquée pour se coupler dans ledit trou de connexion (5) **caractérisée en ce que** la surface extérieure (41) de ladite gaine (4a, 4b) est essentiellement en tronc de cône de façon à se coupler essentiellement sur le profil du trou (5).

2. Bague (100, 101) selon la revendication 1, **caractérisée en ce que** la conicité de ladite gaine en tronc de cône diverge en s'éloignant de ladite plaque (2, 2a).

3. Bague (100, 101) selon l'une quelconque des revendications précédentes **caractérisée en ce que** la surface intérieure de ladite gaine (4b) est en forme de tronc de cône.

4. Bague (100, 101) selon l'une quelconque des revendications précédentes **caractérisée en ce que** ladite plaque (2, 2a) est essentiellement circulaire.

5. Bague (1, 100, 101) selon l'une quelconque des revendications précédentes **caractérisée en ce que** ladite gaine (4, 4a, 4b) a une longueur égale à l'épaisseur de la paroi de séparation (P) dudit accumulateur (A).

6. Bague (1, 100, 101) selon l'une quelconque des revendications de 1 à 4 **caractérisée en ce que** ladite gaine (4, 4a, 4b) a une longueur inférieure à l'épaisseur de la paroi de séparation (P) dudit accumulateur (A).
